# EUROPÄISCHE PATENTSCHRIFT

(11) **EP 4 284 609 B1**
(45) Veröffentlichungstag und Bekanntmachung des Hinweises auf die Patenterteilung: **19.02.2025**
(21) Anmeldenummer: 22718046.0
(22) Anmeldetag: 19.04.2022
(51) Int. Cl.: B27K 1/00, E04C 3/292, B27M 1/02

(54) **VORRICHTUNG, INSBESONDERE VERBUNDTRÄGER, UND VERFAHREN ZUR HERSTELLUNG SOWIE ZUM ABBAU DER VORRICHTUNG**
DEVICE, IN PARTICULAR COMPOSITE BEAM, AND METHOD FOR PRODUCING AND FOR DISMANTLING THE DEVICE
DISPOSITIF, EN PARTICULIER POUTRE COMPOSITE, ET PROCÉDÉ DE PRODUCTION ET DE DÉMONTAGE DU DISPOSITIF

(43) Veröffentlichungstag der Anmeldung: 06.12.2023
(73) Patentinhaber: Hycobility Engineering & Technologies GmbH, 1010 Wien (AT)
(72) Erfinder: WLASAK, Erich, 1010 WIEN (AT)
(74) Vertreter: Puchberger & Partner Patentanwälte
(86) Internationale Anmeldenummer: PCT/AT2022/060122
(87) Internationale Veröffentlichungsnummer: WO 2023/201379

(56) Entgegenhaltungen:
- JP-A- 2000 064 503
- JP-A- 2019 127 087
- JP-A- H1 054 108

## Beschreibung

Die Erfindung betrifft eine Vorrichtung, insbesondere einen Verbundträger und ein Verfahren zur Herstellung sowie zum Abbau der Vorrichtung.

Trägerähnliche Vorrichtungen bzw. lastabtragende Elemente sind dazu ausgebildet Belastungen aufzunehmen und sind im Stand der Technik in unterschiedlichen Werkstoffvariationen bekannt. Einerseits sind insbesondere Stahlträger aufgrund ihrer hohen Belastbarkeit im Bauwesen im Einsatz. Andererseits werden auch Holzträger für Bauzwecke eingesetzt und sind ein besonders ökologischer Werkstoff für Bauvorhaben.

Aus den genannten Gründen wäre die Verwendung des Werkstoffs Holz zwar oft wünschenswert, jedoch stellt die Dauerhaftigkeit von Holz im Außenbereich seit Jahrzehnten eine hohe Herausforderung für die Holztechnologie und die Verwendung von Holz in technischen Elementen dar. Insbesondere wenn tragende Bauteile bzw. Träger statischen und dynamischen Belastungen unterworfen sind, wird diese Anforderung sehr schnell zu einem limitierenden Faktor, da Holz durch abiotischen und biotischen Abbau über längere Zeiträume hinweg teilweise dramatisch an Festigkeit und Steifigkeit verliert.

Die Verwendung von Holz in technischen Anwendungen bedingt technologische und verfahrenstechnische Herausforderungen. Der hoch anisotrope Werk- und Rohstoff erfordert in seiner Anwendung einerseits exakte Materialkenntnis, andererseits konnte man mit homogenen und isotropen Materialien wie Stahl und Kunststoff innovative, effiziente und kostengünstige Lösungen realisieren, die mit dem Werkstoff Holz zwar vielfach technisch umsetzbar gewesen wären, aber aufgrund der komplexeren und aufwendigeren Formgebung aus wirtschaftlicher Sicht nicht kompetitiv waren.

Ferner sind Berechnungen in Bezug auf homogene Materialien wie etwa Kunststoffen und Metalle einfacher möglich und diese Materialien sind dadurch auch leichter beherrschbar. Diese Berechenbarkeit ist für Holz erst seit relativ kurzer Zeit gegeben.

Holz wurde in der Vergangenheit auf breiter Basis auch in verschiedensten technischen Produkten und Geräten eingesetzt. Ein zusätzlicher Nachteil von Holz ist aufgrund des spröden Versagens auf Zug die verhältnismäßige geringe Energieaufnahme im Falle des Bruchs. Bei Zugversagen werden vornehmlich scharfkantige Bruchflächen beobachtet, die beispielsweise bei Unfällen zu einer erhöhten Verletzungsgefahr von beteiligten Personen führen kann.

Im Stand der Technik ist zur Überwindung dieser Nachteile die chemische und/oder physikalische Holzmodifikation bekannt. Durch unterschiedliche Verfahren werden Holzquerschnitte gänzlich oder teilweise modifiziert oder imprägniert, wodurch sich die Eigenschaften des Materials verbessern lassen. Neben der erhöhten Dauerhaftigkeit und Quellungsvergütung ergeben sich bei der thermischen Modifikation anfänglich eine leichte Verbesserung der mechanischen Eigenschaften (Steifigkeit und Festigkeit), eine Reduktion der Dichte und der Feuchteaufnahme. Jedoch führt die Holzmodifikation zu mechanischen Veränderungen, beispielsweise Versprödung, sowie zu zusätzlichen Kosten.

Eine weitere Möglichkeit zur Verbesserung der Dauerhaftigkeit von Holz ist dessen Beschichtung. Jedoch kann der Schutz durch Beschichtung auch nicht vollständig garantiert werden. Imprägnierungen mit Schutzmitteln bedingen zusätzliche Kosten und beinhalten die Freisetzung umweltschädlicher Substanzen. Kunststoffummantelungen hingegen weisen Nachteile bei der Entsorgung und beim Recycling nach Nutzung des Bauteils auf.

Zur Überwindung der Nachteile von Holz sind Holz-Metall-Verbunde zwar bekannt, jedoch stellen diese eine bislang kaum eingesetzte und technisch-wissenschaftlich untersuchte Werkstoffgruppe dar.

Stahl ist dafür bekannt, eine hohe Streckgrenze aufzuweisen und hat also im Gegensatz zu Holz deutlich bessere, insbesondere auch isotrope Festigkeitseigenschaften. Die Wärmeleitfähigkeit von Stahl ist im Vergleich zu Holz allerdings ebenso erhöht, sodass Stahlträger naturgemäß dazu ausgebildet sind, in Bauwerken mehr Wärme als Holz oder ähnliche faserhaltige Werkstoffe zu leiten. Insbesondere auch aufgrund von Witterung, können bei Holz im Vergleich zu anderen Baustoffen bei der Verwendung Einschränkungen bestehen.

Bisherige Überlegungen beinhalten derzeit Verklebungen und Verschraubungen von Holz- und Metallkomponenten. Teilweise werden die beiden Werkstoffe durch eine Kunststoffummantelung gefügt. Auch diese technischen Lösungen beinhalten fast immer hohe Probleme beim Auseinanderbau und Recycling.

Die Verwendung zusätzliche Verbindungsmitteln, wobei beispielsweise in den Trägern Bohrungen vorgesehen sind und die einzelnen Komponenten des Verbundträgers schließlich verschraubt werden, weist erhebliche Nachteile auf. So können hierbei gekerbte Querschnitte notwendig sein, die eine festigkeitsmäßige Schwachstelle in einem Bauwerk darstellen können, da die erforderlichen Bohrungen für die Verschraubungen zur Kerbrissbildungen führen können. Ferner stellt ein mithilfe von Verbindungsmitteln gebildeter Verbundträger auch einen erhöhten Fertigungsaufwand dar.

Als Zielkonflikt kann somit die Problematik angesehen werden, eine Vorrichtung bereitzustellen, die die Nachteile des Standes der Technik überwindet und bestimmte vorteilhafte Eigenschaften von Faserverbundmaterialien, insbesondere Holz, und Metall kombiniert. Gegebenenfalls ist es eine Aufgabe der vorliegenden Erfindung, diesen Zielkonflikt zu überwinden. Gegebenenfalls ist es eine weitere Aufgabe der Erfindung, einen dauerhaften Träger mit verbesserten Wärme- und Festigkeitseigenschaften für ökologische Bau- und Konstruktionsvorhaben bereitzustellen ohne dabei belastungskritische Kerbstellen zu bilden, die die Dauerfestigkeit des Trägers beeinträchtigen. Gegebenenfalls ist es eine weitere Aufgabe der Erfindung, eine Vorrichtung, insbesondere einen Verbundträger zu schaffen, der besonders einfach herstellbar, aber auch wieder auseinanderbaubar bzw. rezyklierbar ist.

Diese und andere Aufgaben werden gegebenenfalls durch eine Vorrichtung und die Verfahren mit den Merkmalen der unabhängigen Patentansprüche gelöst.

Der vorliegenden Erfindung liegt insbesondere die Beobachtung zu Grunde, dass, insbesondere hygroskopische Faserverbundwerkstoffe wie etwa Holz die Eigenschaft der starken Dimensionsänderung bei Aufnahme von polaren Fluiden, also Flüssigkeiten bzw. Gasen, insbesondere bei Wasseraufnahme, etwa durch Wasserkontakt oder Luftfeuchtigkeitsveränderung und/oder durch eine Temperaturveränderung, besitzen.

Durch die Einlagerung von polaren Fluiden in die Faserverbundstruktur kommt es zu einer Volumenerhöhung des Materials. Diese Volumenerhöhung wird in Zusammenhang mit der vorliegenden Erfindung gegebenenfalls auch als Quellung bezeichnet. Diese Quellerscheinungen können neben Wasser auch durch unterschiedliche polare Flüssigkeiten und Stoffe, wie etwa Salzlösungen, Alkohole, Ammoniak, etc. erzielt werden. Die Entfernung der Fluide aus dem Faserverbundmaterial bewirkt im Gegenzug eine Volumsreduktion, auch als Schwinden bezeichnet.

Die Volumsveränderung erfolgt dabei nur kaum in Längsrichtung, also in Faserrichtung des Faserverbundmaterials, sondern hauptsächlich quer zur Faserrichtung. Insbesondere weist ein quellbarer Faserverbundwerkstoff, beispielsweise Holz, im Sinne der vorliegenden Erfindung eine Haupterstreckungsrichtung der Fasern auf. Die Quellung tritt insbesondere in Querrichtung zur Haupterstreckungsrichtung der Fasern auf.

Quellen und Schwinden wird üblicherweise als großer technischer Nachteil in der Holztechnologie gewertet. So wird im Stand der Technik oft versucht, den Volumsveränderungen von Holz entgegenzuwirken. Im Rahmen der vorliegenden Erfindung ist es jedoch überraschenderweise gelungen, die Quelleigenschaften von Faserverbundmaterialien in vorteilhafter Weise auszunutzen, um zumindest eine der genannten Aufgaben zu lösen.

Im Stand der Technik sind Holz-Verbundmaterialien der eingangs genannten Art grundsätzlich bekannt. Beispielsweise beschreibt die JPH1054108A ein holzverstärktes Rohr, wobei jedoch kein Aufquellen des Holzes erfolgt. Ein Metallstab, in dem Holz angeordnet ist, wird in der JP2000064503A beschrieben, wobei das Holz durch Erhitzen oder Tränken mit Wasser aufgequollen sein kann. Schließlich beschreibt die JP2019127087A Holz, das von einem gewebten Fasermaterial umgeben ist.

Eine erfindungsgemäße Vorrichtung umfasst nun einen hohlprofilförmigen Außenkörper mit einem Innenraum und einen im Innenraum angeordneten Kern, wobei der Kern ein bei Fluidkontakt quellbares Faserverbundmaterial, nämlich Holz, umfasst oder daraus gebildet ist. Es ist vorgesehen, dass der Kern im Innenraum durch ein Fluid aufgequollen ist und einen durch die Quellung erzeugten Druck auf den Außenkörper ausübt.

Der Kern ist aus Holz gebildet bzw. er umfasst Holz.

Durch die Quelleigenschaften, sowie insbesondere durch die hygroskopische Eigenschaft, des Kerns kann ein dauerhaftes Verbinden des Kerns mit dem Außenkörper ermöglicht werden. Insbesondere kann dadurch zumindest eine reibschlüssige, insbesondere eine form- und reibschlüssige, Verbindung zwischen Kern und Außenkörper, insbesondere Innenfläche des Außenkörpers, erreicht werden.

Die Volumenänderung des Kerns durch seine Quellung führt in weiterer Folge im Bereich der Kontaktflächen von Außenkörper und Kern gegebenenfalls zu plastischen Deformationen des Kerns. Dieser an die Kontaktflächen angrenzende Pressbereich kann auch als den Verdichtungsbereich bezeichnet werden. Insbesondere führt die auftretende Verdichtung des Kerns, quer zur Faser zu einer maßgeblichen Erhöhung der Festigkeiten und Steifigkeiten längs zur Faser.

Neben Holz kann als Faserverbundmaterialien beispielsweise auch ein Nanocellulose-Material eingesetzt werden. Gegebenenfalls umfasst der Kern ein komprimiertes Furniermaterial.

Je nach Krümmung der Kontaktflächen wirkt die maximale Vergleichsspannung im Kern nah unter der Außenfläche des Kerns, sodass dort gegebenenfalls Pressdeformationen im Verdichtungsbereich auftreten, wodurch eine nach außen gerichtete Kraft gegen den Außenkörper resultiert. Diese Kraft führt an den Kontaktflächen insbesondere dazu, dass eine Normalkraft zur Bildung einer reibschlüssigen Verbindung in Transversalrichtung des Trägers besteht.

Als Träger kann in Zusammenhang mit der vorliegenden Erfindung jedes langgestreckte Element oder Bauteil verstanden werden, das insbesondere in

Längserstreckungsrichtung eine größere Abmessung aufweist als die größte Abmessung quer zur Längserstreckungsrichtung. Ein Verbundträger im Sinne der vorliegenden Erfindung kann beispielsweise ein lastabtragendes Verbundelement sein.Ein derartiger Träger kann beispielsweise als Träger für Baukonstruktionen, als Säule eines Automobilchassis oder einer Automobilkarosserie, als tragendes Element einer Leichtbaukonstruktion, als Träger einer Maschinenbaukonstruktion oder dergleichen eingesetzt werden.

Fakultativ können Formschlusselemente vorgesehen sein, um eine zusätzliche formschlüssige Verbindung zwischen Außenkörper und Kern zu erreichen. Derartige Formschlusselemente können unterschiedlich ausgebildet sein. Beispielsweise kann an der Innenfläche des Außenkörpers zumindest ein Formschlussfortsatz, etwa in Form einer Rippe, angeordnet sein. Der Formschlussfortsatz kann im Betriebszustand der Vorrichtung in einen Abschnitt des Kerns drücken, wodurch eine formschlüssige Verbindung erhalten werden kann. Gegebenenfalls kann der Kern auch eine Formschlussausnehmung aufweisen, in die der Formschlussfortsatz eingreift. Die Formschlussausnehmung kann beispielsweise eine Nut sein.

Der Kern und der Außenkörper verlaufen gegebenenfalls entlang einer gemeinsamen Haupterstreckungsrichtung und der hohle Außenkörper umschließt bevorzugt den Kern zumindest lateral, sodass gegebenenfalls eine Lateralverbindung zwischen Außenkörper und Kern besteht. Die Haupterstreckungsrichtung ist somit insbesondere als jene Richtung anzusehen, die der größten räumlichen Ausdehnung der Vorrichtung entspricht. Eine Lateralrichtung ist insbesondere als eine orthogonal von der Haupterstreckungsrichtung wegweisende Richtung anzusehen. Die Quellung des Kerns kann insbesondere in radialer sowie in tangentialer Richtung erfolgen.

Als Querschnitt des Trägers ist insbesondere jener Flächenschnitt aufzufassen, der quer zur Längserstreckungsrichtung verläuft. Beispielsweise kann der Außenkörper ein Rohr sein, wobei der Querschnitt des Außenkörpers dann kreisringförmig sowie insbesondere geschlossen ist. Der Begriff geschlossener Querschnitt bezeichnet also insbesondere einen durchgängigen Querschnitt ohne Unterbrechung wie dies etwa bei einem Rohrquerschnitt der Fall ist.

Gegebenenfalls ist vorgesehen, dass der Kern im Betriebszustand einen auf den Außenkörper wirkenden Innendruck ausübt. Ein möglichst gleichmäßig verteilter Druck ermöglicht eine weitläufige Ausbildung der Verdichtungszone, in dem die Pressdeformationen auftreten.

Es kann auch vorgesehen sein, dass der Außenkörper einen geschlossenen Querschnitt aufweist. So kann sichergestellt werden, dass bei Belastung des Verbundträgers eine Verformung des Querschnitts weitestgehend vermieden wird. Zudem bewirkt der geschlossene Querschnitt insbesondere eine gleichmäßige Druckverteilung zwischen Kern und Innenfläche des Außenkörpers.

Insbesondere ist vorgesehen, dass der Druck, den der Kern im Betriebszustand auf den Außenkörper ausübt wenigstens 3 N/mm², insbesondere wenigstens 5 N/mm² oder wenigstens 10 N/mm², beträgt. So kann bei üblichen Reibbedingungen zwischen Holz und Stahl eine hinreichend große Normalkraft erzeugt werden, sodass der Kern im Außenkörper gehalten wird.

Gegebenenfalls ist vorgesehen, dass der Kern im Betriebszustand im Innenraum verspannt ist. Dadurch kann bei besonders hohen Belastungen des Verbundträgers der Kern dennoch formfest und insbesondere stabil im Außenkörper gehalten werden ohne dass Relativbewegungen an den Berührungsflächen bei der Deformation des Trägers auftreten.

Bevorzugt ist vorgesehen, dass der Außenkörper als Metallprofil, insbesondere als Stahlprofil, ausgebildet ist. Dadurch kann ein Außenkörper vorgesehen werden, der sich besonders gut für das Bauwesen oder für andere Konstruktionen, beispielsweise für den Automobilbau, Maschinenbau oder Anlagenbau, eignet. Gegebenenfalls kann die Vorrichtung als Überlager eingesetzt werden und so beispielsweise Ziegel- oder Stahlüberlager ersetzen.

Gegebenenfalls ist vorgesehen, dass der Kern in einem Fügezustand in den Innenraum einbringbar und/oder entnehmbar ist, wobei der Kern im Betriebszustand durch Fluidaufnahme stärker aufgequollen ist als im Fügezustand und/oder wobei der Kern im Betriebszustand einen höheren Fluidgehalt aufweist als im Fügezustand. Im Fügezustand ist der Kern insbesondere lose im Außenkörper enthalten und es besteht insbesondere keine reibschlüssige Verbindung zwischen Kern und Innenfläche des Außenkörpers.

Insbesondere sind die Dimensionen des Kern so gewählt, dass sie im Fügezustand in den Innenraum des Außenkörpers, beispielsweise ein Formrohr, ein Strangpressprofil, etc., eingeschoben oder eingebracht werden können. Gegebenenfalls wird die Formgebung des Kerns so gewählt, dass mit dem Materialschwund während der Reduktion des Fluidgehalts der gewünschte Querschnitt hergestellt wird.

Fakultativ kann vorgesehen sein, dass Kern und Innenraum im Fügezustand eine Spielpassung aufweisen, wobei gegebenenfalls ein Untermaß des Kerns in Bezug auf den Innenraum besteht. Dadurch kann das Ausmaß des Reibschlusses zwischen Kern und Außenkörper im aufgequollenen Zustand fertigungsmäßig bestimmt werden. Zudem kann der Kern im Fügezustand einfach aus Innenraum des Außenkörpers entfernt werden.

Es kann vorgesehen sein, dass der Kern den Innenraum des Außenkörpers im Betriebszustand vollständig ausfüllt. So kann die Außenfläche des Kerns vom Außenkörper vollständig umschlossen werden und eine feste Verbindung zwischen den Körpern erreicht werden.

Es ist vorgesehen, dass der Kern im Betriebszustand fluiddicht eingeschlossen ist. So kann der Kern im aufgequollenen Zustand vor Fluidverlust und einem Schwinden der Quellung geschützt werden. Insbesondere kann dadurch eine dauerhafte Stabilität der Vorrichtung erreicht werden.

Bevorzugt ist vorgesehen, dass der Kern durch den Außenkörper sowie durch zumindest einen am Außenkörper angeordneten Verschluss fluiddicht eingeschlossen ist. Dadurch kann eine weitere Maßnahme zum Unterbinden des Fluidverlusts getroffen werden. Alternativ oder zusätzlich kann der Kern mit einer Beschichtung fluiddicht eingeschlossen sein. Fluiddicht bezeichnet in Zusammenhang mit der vorliegenden Erfindung insbesondere die Eigenschaft eines Materials, im Wesentlichen undurchlässig für eine Fluid zu sein, insbesondere jenes Fluid, das die Quellung des Kerns bewirkt. Beispielsweise bedeutet fluiddicht im Fall, dass das Fluid Wasser ist insbesondere, dass das Material im Wesentlichen undurchlässig für Wasser in flüssiger und gasförmiger Form ist.

Gegebenenfalls ist vorgesehen, dass das Fluid ausgewählt ist aus einem oder mehreren der folgenden Fluide: Wasser, Salzlösung, Alkoholen, Ammoniak. Ein bevorzugtes Fluid ist Wasser. Dadurch kann der hygroskopische Effekt von Holz genutzt werden.

Insbesondere ist vorgesehen, dass der Kern entlang seines äußeren Umfangs einen Verdichtungsbereich aufweist. Dadurch kann infolge der Deformation des Kerns die Normalkraft für die reibschlüssige Verbindung erwirkt werden. Zusätzlich werden die mechanischen Eigenschaften des Materials des Kerns im Verdichtungsbereich noch weiter verbessert.

Gegebenenfalls ist vorgesehen, dass durch den durch die Quellung erzeugten Druck die Spannung entlang des Umfangs des Profilquerschnitts des Außenkörpers erhöht ist. So kann eine vorgespannte Vorrichtung gebildet werden.

Es kann vorgesehen sein, dass eine Außenfläche des Kerns zumindest teilweise mit der Innenseite des Außenkörpers in direktem Kontakt steht, und/oder dass zwischen Außenfläche des Kerns und Innenseite des Außenkörpers eine Verbindungsschicht, beispielsweise eine Klebeschicht, angeordnet ist. Dadurch kann eine weitere Maßnahme zur Unterbindung einer Relativbewegung zwischen Kern und Außenkörper an den Kontaktflächen getroffen werden. Gegebenenfalls kann auch vorgesehen, dass die Oberfläche des Kerns behandelt ist, um die reibschlüssige Verbindung zu verbessern. Beispielsweise kann die Oberfläche des Kerns aufgeraut sein.

Eine reibschlüssige Verbindung zwischen Außenkörper und Kern kann auch dadurch verbessert werden, indem die Holzoberfläche mit Substanzen beschichtet wird, die den Reibbeiwert oder die Haftungseigenschaften zur Innenseite des Außenkörpers erhöhen. Bei Substanzen, die den Reibbeiwert erhöhen kann es sich beispielsweise um korundhaltige Beschichtungsmittel handeln. Bei Substanzen, die die Haftungseigenschaften erhöhen kann es sich beispielsweise um Kontaktkleber handeln.

Insbesondere bei Erhöhung der Haftungseigenschaften kann es bevorzugt sein, entsprechende Beschichtungen auch auf der Innenseite des Außenkörpers aufzubringen. Durch das Zusammenspiel beider Beschichtungen kann es zu chemischen Reaktionen und so zu höheren Reibwerten oder zu Anhaftungen beider Materialien kommen.

Gegebenenfalls kann die Verbindung zwischen Kern und Außenkörper durch Oxidation von Außenfläche des Kerns und/oder Innenfläche des Außenkörpers verbessert werden.

Gegebenenfalls kann die Verbindung zwischen Kern und Außenkörper durch chemische Behandlung der Oberfläche des Kerns verbessert werden. Gegebenenfalls reagiert der behandelte Kern dann mit der Innenfläche des Außenkörpers.

Gegebenenfalls kann die Verbindung zwischen Kern und Außenkörper durch mechanische Behandlung des Außenkörpers, beispielsweise durch Prägen und/oder Walzen verbessert werden.

An der Kontaktfläche zwischen Kern und Außenkörper können zusätzlich flächige oder punktuell agierende Sensoren, insbesondere Drucksensoren, angebracht sein, um beispielsweise den aufgequollenen Zustand des Kerns zu kontrollieren.

Die Außenfläche des Kerns kann auch Träger von Leiterbahnen für Strom- und Signalführung sein.

Gegebenenfalls ist vorgesehen, dass der Kern als Hohlkörper ausgebildet ist, der gegebenenfalls einen im Wesentlichen in seiner Längserstreckungsrichtung verlaufenden, insbesondere zumindest einseitig offenen, Hohlraum aufweist. Dadurch kann das Fluid zum Quellung des Kern leichter eingeleitet und bei Bedarf wieder entfernt werden. Gegebenenfalls kann vorgesehen sein, dass der Kern hohlprofilförmig ausgebildet ist.

Der Hohlraum kann gegebenenfalls auch dafür genutzt werden, um nach dem Quellvorgang Rohre für Gas- oder Flüssigkeitstransport oder Leiterbahnen in die Vorrichtung einzubringen.

Im Hohlraum kann gegebenenfalls ein Innenprofilkörper angeordnet sein, beispielsweise ein Rohr. Gegebenenfalls übt der Kern auch einen durch die Quellung erzeugten Druck auf den Innenprofilkörper aus.

Gegebenenfalls ist vorgesehen, dass das Fluid Wasser ist, und/oder dass der Fluidgehalt, des Kerns im Betriebszustand zumindest 1 Gew.-%, insbesondere 5 Gew.-%, bevorzugt 10 Gew.-%, höher ist als im Fügezustand. Dadurch kann gegebenenfalls eine ausreichende Quellung erreicht werden.

Insbesondere ist vorgesehen, dass der Außenkörper und der Kern reibschlüssig miteinander verbunden sind.

Gegebenenfalls ist vorgesehen, dass der Außenkörper an seiner Innenseite zumindest ein Formschlusselement, insbesondere einen Formschlussfortsatz, zur formschlüssigen Verbindung zwischen Außenkörper und Kern aufweist.

Gegebenenfalls ist vorgesehen, dass der Kern zumindest eine Formschlussausnehmung zum Eingriff eines Formschlussfortsatzes aufweist. Gegebenenfalls ist vorgesehen, dass der Kern thermisch modifiziert ist, insbesondere durch Temperaturbehandlung bei zumindest 120°C, bevorzugt bei etwa 200°C. Insbesondere ist der Kern durch Temperaturbehandlung zwischen 120°C und 250°C thermisch modifiziert. Gegebenenfalls ist der Kern durch Temperaturbehandlung für mindestens 5 Minuten, bevorzugt für mindestens 10 Minuten, thermisch modifiziert. Gegebenenfalls ist der Kern durch Temperaturbehandlung für höchstens 30 Minuten thermisch modifiziert. Dadurch können die mechanischen Eigenschaften des Kerns verbessert werden.

Ferner umfasst die Erfindung gegebenenfalls ein Verfahren zur Herstellung einer Vorrichtung, insbesondere eines Verbundträgers. Die Vorrichtung umfasst insbesondere einen hohlprofilförmigen Außenkörper mit einem Innenraum und einen im Innenraum angeordneten Kern, wobei der Kern ein bei Fluidkontakt quellbares Faserverbundmaterial, nämlich Holz, umfasst oder daraus gebildet ist.

Gegebenenfalls umfasst das Verfahren die folgenden Schritte:
(a) Bereitstellen des Kerns, wobei der Kern einen ersten Fluidgehalt aufweist,
(b) Einführen des Kerns den Innenraum des Außenkörpers,
(c) Erhöhen des Fluidgehalts des Kerns, sodass der Kern durch das Fluid aufgequollen ist und eine durch die Quellung erzeugte Druckkraft auf den Außenkörper ausübt, wobei der Kern einen zweiten Fluidgehalt aufweist.

So kann in vorteilhafter Weise eine erfindungsgemäße Vorrichtung gebildet werden, wobei insbesondere eine reibschlüssige Verbindung zwischen Außenkörper und Kern besteht.

Gegebenenfalls ist vorgesehen, dass das Fluid Wasser ist, und/oder dass der zweite Fluidgehalt zumindest 1 Gew.-%, insbesondere zumindest 5 Gew.-%, bevorzugt zumindest 10 Gew.-%, über dem ersten Fluidgehalt liegt. So kann insbesondere eine ausreichende Quellung für die Verbindung von Außenkörper und Kern erreicht werden.

Gegebenenfalls ist vorgesehen, dass Kern und Innenraum in Schritt (b) eine Spielpassung aufweisen. So kann insbesondere die wirkende Normalkraft für die Verbindung im Betriebszustand bestimmt werden.

Gegebenenfalls ist vorgesehen, dass das Fluid Wasser ist, und dass der erste Fluidgehalt höchstens 10 Gew.-%, insbesondere höchstens 5 Gew.-% beträgt, und/oder dass der erste Fluidgehalt unter der Gleichgewichtsfeuchte des Faserverbundmaterials des Kerns bei einer Temperatur von 20°C und einer relativen Luftfeuchte von 50% liegt. Insbesondere kann der erste Fluidgehalt zumindest 5 Gew.-%, gegebenenfalls zumindest 10 Gew.-%, unter der Gleichgewichtsfeuchte des Faserverbundmaterials des Kerns bei einer Temperatur von 20°C und einer relativen Luftfeuchte von 50% liegen.

Gegebenenfalls wird dem Kern weitgehend oder vollständig die Feuchtigkeit durch Trocknung oder andere Verfahren entzogen. Durch den Wasserentzug verliert das Holz an Volumen. Dadurch kann der Kern im Fügezustand in den Innenraum des Außenkörpers eigeführt werden.

Gegebenenfalls ist vorgesehen, dass das Verfahren ferner folgenden Schritt umfasst: (d) Bilden von Formschlusselementen durch Verformen des Außenkörpers. So können zusätzliche Zwangskräfte zwischen Außenkörper und Kern erreicht werden, die die Körper zueinander sichern.

Gegebenenfalls ist vorgesehen, dass das Verfahren ferner folgenden Schritt umfasst:
(d) Walzen der Vorrichtung. Dadurch kann der Kern verdichtet werden, was die mechanischen Eigenschaften weiter verbessert.

Gegebenenfalls wird der Kern zwischen Schritt (a) und Schritt (b) mit flüssigem und/oder gasförmigem Wasser benetzt.

Gegebenenfalls wird der Kern vor Schritt (b) chemisch behandelt, beispielsweise mit Ammoniak, um eine bessere Quellung zu ermöglichen.

Die vorliegende Erfindung betrifft gegebenenfalls ferner ein Verfahren zum Abbau einer Vorrichtung, insbesondere eines Verbundträgers. Die Vorrichtung umfasst gegebenenfalls einen hohlprofilförmigen Außenkörper mit einem Innenraum und einen im Innenraum angeordneten Kern, wobei der Kern ein bei Fluidkontakt quellbares Faserverbundmaterial, nämlich Holz, umfasst oder daraus gebildet ist.

Gegebenenfalls weist das Verfahren die folgenden Schritte auf:
(a) Bereitstellen der Vorrichtung, wobei der Kern im Innenraum durch ein Fluid aufgequollen ist und eine durch die Quellung erzeugte Druckkraft auf den Außenkörper ausübt, wobei der Kern einen zweiten Fluidgehalt aufweist,
(b) Verringern des Fluidgehalts des Kerns, sodass der Kern einen ersten Fluidgehalt aufweist,
(c) Entnehmen des Kerns aus dem Außenkörper.

Dadurch kann eine Vorrichtung gegebenenfalls wieder getrennt und deren Einzelteile getrennt verwertet werden.

Gegebenenfalls ist vorgesehen, dass das Verringern des Fluidgehalts des Kerns in Schritt (b) durch Erwärmen des Kerns erfolgt. Dadurch kann der wirkende Druck zwischen Außenkörper und Kern reduziert werden, sodass insbesondere keine reibschlüssige und/oder formschlüssige Verbindung mehr zwischen Außenkörper und Kern besteht.

Gegebenenfalls ist vorgesehen, dass das Fluid Wasser ist, und/oder dass der zweite Fluidgehalt zumindest 1 Gew.-%, insbesondere zumindest 5 Gew.-%, bevorzugt zumindest 10 Gew.-%, über dem ersten Fluidgehalt liegt. So kann insbesondere der erforderliche Schwund zum Lösen der Verbindung erwirkt werden.

Gegebenenfalls ist vorgesehen, dass Kern und Innenraum in Schritt (c) eine Spielpassung aufweisen.

In einer Vorrichtung kann auch vorgesehen sein, dass die Fasern des Kerns im Wesentlichen in Haupterstreckungsrichtung des Kerns verlaufen.

Der Querschnitt des Kerns und/oder des Außenkörpers kann viereckig, insbesondere rechteckig oder quadratisch, rund, polygonförmig, hyperbolisch, konvex, konkav, trapezförmig, elliptisch, sechseckig, mannigfaltig, rhomboidförmig, deltoidförmig, T-förmig, U-förmig oder auch vieleckig sein. Dadurch kann ein geeigneter Querschnitt für unterschiedliche Einsatzzwecke bereitgestellt werden.

Gegebenenfalls ist vorgesehen, dass im Betriebszustand die strukturmechanische Kompressionsenergie des Kerns der strukturmechanischen Expansionsenergie des Außenkörpers entspricht.

Gegebenenfalls ist vorgesehen, dass der radiale Querschnitt der Vorrichtung um beide Hauptspannungsachsen das gleiche Flächenträgheitsmoment aufweist.

Es kann vorgesehen sein, dass der Kern einteilig oder mehrteilig ausgebildet ist. Beispielsweise kann vorgesehen sein, dass der Kern mehrere voneinander getrennte Abschnitte aufweist.

Gegebenenfalls ist vorgesehen, dass der Querschnitt der Vorrichtung um beide Hauptspannungsachsen unterschiedliche Flächenträgheitsmomente aufweist und/oder dass die Form des Kerns an die Form des Innenraums angepasst ist.

Gegebenenfalls ist vorgesehen, dass die Vorrichtung im Fügezustand eine Abmessung aufweist, die ein Einführen und Entnehmen des Kerns in den Innenraum des Außenkörpers ermöglicht, und dass die Vorrichtung im Betriebszustand ein aufgequollenes Maß aufweist, sodass eine feste Verbindung zwischen Kern und Außenkörper besteht. Gegebenenfalls ist diese Abmessung ein Übermaß oder Untermaß einer Spielpassung.

Gegebenenfalls ist vorgesehen, dass das Anreichern des Kerns mit einem Fluid reversibel ist, wobei nach einer Reduktion des Fluidgehalts, insbesondere der Holzfeuchte, im Kern der Kern aus dem Außenkörper wieder entnommen wird.

In zusätzlichen Ausführungen können in einer Vorrichtung und/oder einem Verfahren der Erfindung zusätzlich oder alternativ die folgenden Merkmale vorgesehen sein:
Gegebenenfalls wird eine rezyklierbare Fügetechnik für Holz-Metall-Verbunde bereitgestellt. Kern und Außenkörper werden insbesondere durch ein hydrothermisches Verfahren gefügt und gegebenenfalls wieder getrennt. Der insbesondere hygroskopische Werkstoff Holz besitzt gegebenenfalls die Eigenschaft einer Volumenänderung bei Feuchtigkeitsaufnahme durch Wasserkontakt oder Luftfeuchtigkeitsveränderung und/oder Temperaturveränderung.

Durch die Einlagerung von Wasser in die Holzstruktur eines Kerns kann es zu einer Volumenvergrößerung kommen. Diese Eigenschaft kann als Quellung bezeichnet werden.

Bei Wasser erfolgt die Volumenzunahme gegebenenfalls in einem Holzfeuchtebereich von 0 bis etwa 30 Gew.-%, dem Fasersättigungsbereich. Über diesem Wert werden üblicherweise keine Veränderungen des Volumens beobachtet.

Gegebenenfalls ist oder wird der Kern vorverdichtet, um die nachfolgende Verdichtung bei der Quellung zu begünstigen. Aufgrund des Pressdrucks welcher beim Quellen von Holz auftritt (theoretischer Pressdruck einer verholzten Zellwand ~ etwa 500 N/mm²) und der geringen Querdruckfestigkeit von Holz (je nach Holzart im Bereich von etwa 1 bis 15 N/mm²) wird das Holzmaterial des Kerns gegebenenfalls durch den Außenkörper komprimiert.

Eine plastische Verformung von Holz in radialer bzw. tangentialer Richtung kann leichter bei erhöhter Feuchtigkeit oder erhöhter Temperatur oder nach chemischer Vorbehandlung erfolgen.

Gegebenenfalls kann ein mehrschichtiger Kern auch aus gegebenenfalls vorkomprimierten Holzschichten und andren Materialien, beispielsweise Keramik, Kunststoff, Metall, Metallschäume, etc., aufgebaut sein.

Auch eine Verformung der Vorrichtung durch Aufbringung eines äußeren Pressdrucks ist möglich. Damit kann gegebenenfalls das Trägheitsmoment verändert werden oder der Kern selektiv verdichtet werden. Durch den Quellvorgang bzw. durch den zusätzlichen Umformungsvorgang kann durch Formschluss und Reibschluss der Kern mit dem Außenkörper gefügt werden. Dieser Fügeverbindung kann auch durch eine spezielle Oberflächengestaltung wie Aufrauhung oder Hinterschneidungen verbessert sein.

Des Weiteren kann auch die Vorrichtung durch Biegeeinrichtungen, beispielsweise eine Profileinrollmaschine, plastisch verformt werden.

Die Vorverdichtung des Kerns bewirkt gegebenenfalls eine Erhöhung von Steifigkeit und Festigkeit. Insbesondere kann der Holzkörper bzw. der Kern durch den Fügevorgang in seinen Randbereichen verdichtet werden, wodurch sich Festigkeit und Steifigkeit erhöhen und die mechanischen Eigenschaften der Vorrichtung insgesamt verbessert werden. Wesentlicher Vorteil der Vorrichtung ist insbesondere, dass bei Überbeanspruchung der Vorrichtung ein duktiler Bruch mit einer erhöhten Energieaufnahme erfolgt.

Insbesondere auch durch Verdichtung des Kerns lässt sich die aufnehmbare Bruchenergie noch zusätzlich steigern. Nach der Volumenzunahme wird die Vorrichtung stirnseitig an beiden Seiten verschlossen, wodurch der aufgequollene Zustand des Holzes durch die Diffusionsdichtheit des Metalls und des Versiegelungsmaterials, beispielsweise PU-Hartschaum oder andere Kunststoffe dauerhaft konserviert wird.

Der stirnseitige Verschluss des Außenkörpers kann durch Kappen unterschiedlicher Form und aus unterschiedlichen Materialien erfolgen. Die Kappen können mit dem Außenkörper durch Reib-, Form- und/oder Stoffschluss verbunden sein.

Im Falle von Reib- und Stoffschluss können die Kappen durch Herunterdrehen, Abziehen oder durch Erwärmen einfach wieder gelöst werden.

Die Vorrichtung kann auch wieder disassembliert bzw. auseinandergebaut werden, indem der fluiddichte Einschluss des Kerns entfernt wird und die Vorrichtung atmosphärischen bzw. physikalischen Bedingungen ausgesetzt wird, bei denen der Kern wieder an Feuchtigkeit oder anderen Fluiden verliert und schwindet. Der Schwindungsvorgang wird gegebenenfalls so lange fortgesetzt, bis die beiden Fügeteile wieder voneinander getrennt werden können.

Ein wesentlicher Vorteil des Verfahrens ist gegebenenfalls, dass die Metallkomponente bzw. der Außenkörper und die Holzkomponente bzw. der Kern einer Sekundärnutzung oder einem Recycling zugeführt werden können. Darüber hinaus werden aufgrund der Erhöhung der mechanischen Eigenschaften des Verbundes gegebenenfalls die Dimensionen der Bauteile verkleinert und Material gespart.

Handelt es sich bei dem Außenkörper um Stahl, so erfordert der Recyclingprozess im Hochofen die Zufuhr von Kohendioxid und Wärme. Durch die die im Kern gespeicherte Energie und die chemischen Bestandteile kann im Recyclingprozess Energie und Kohle eingespart werden.

Der Außenkörper kann auch durch ein anderes nicht quellfähiges und diffusionsdichtes Material wie Keramik, Kunststoff oder faserverstärkter Kunststoff, gebildet sein oder dieses umfassen.

Die Vorrichtung der vorliegenden Erfindung erlaubt gegenüber herkömmlichen geometrisch ähnlichen Stahlträgern gegebenenfalls einen oder mehrere der folgenden Vorteile:
- Verbesserung der Durchbiegung bei annähernd gleicher Belastung und Masse zumindest 2%, gegebenenfalls 8%.
- Reduzierung der Rohstoffkosten bei gleicher Masse bis zu 40%
- Reduzierung der Kohlendioxidemissionen bei der Herstellung bei gleicher Masse bis zu 20%

Werden hohe Kerne verwendet können die Rohstoffkosten gegebenenfalls um bis zu 50% und die Kohlendioxidemissionen um bis zu 40% reduziert werden.

Weitere Merkmale der vorliegenden Erfindung ergeben sich aus der Beschreibung der Ausführungsbeispiele, den Figuren und den Patentansprüchen.

Im Folgenden wird die Erfindung anhand von nicht ausschließlichen, lediglich exemplarischen Ausführungsbeispiels im Detail erläutert.
Fig. 1a zeigt eine Ausführungsform einer erfindungsgemäßen Vorrichtung in einer schematischen Darstellung im Betriebszustand gemäß einem ersten Ausführungsbeispiel;
Fig. 1b zeigt die Vorrichtung gemäß dem ersten Ausführungsbeispiel im Fügezustand;
Fig. 2a zeigt eine Ausführungsform einer erfindungsgemäßen Vorrichtung in einer schematischen Darstellung im Betriebszustand gemäß einem zweiten Ausführungsbeispiel;
Fig. 2b zeigt die Vorrichtung gemäß dem zweiten Ausführungsbeispiel im Fügezustand;
Fig. 3a zeigt eine Ausführungsform einer erfindungsgemäßen Vorrichtung in einer schematischen Darstellung im Betriebszustand gemäß einem dritten Ausführungsbeispiel;
Fig. 3b zeigt die Vorrichtung gemäß dem dritten Ausführungsbeispiel im Fügezustand
Fig. 4a zeigt eine Ausführungsform einer erfindungsgemäßen Vorrichtung in einer schematischen Darstellung im Betriebszustand gemäß einem vierten Ausführungsbeispiel;

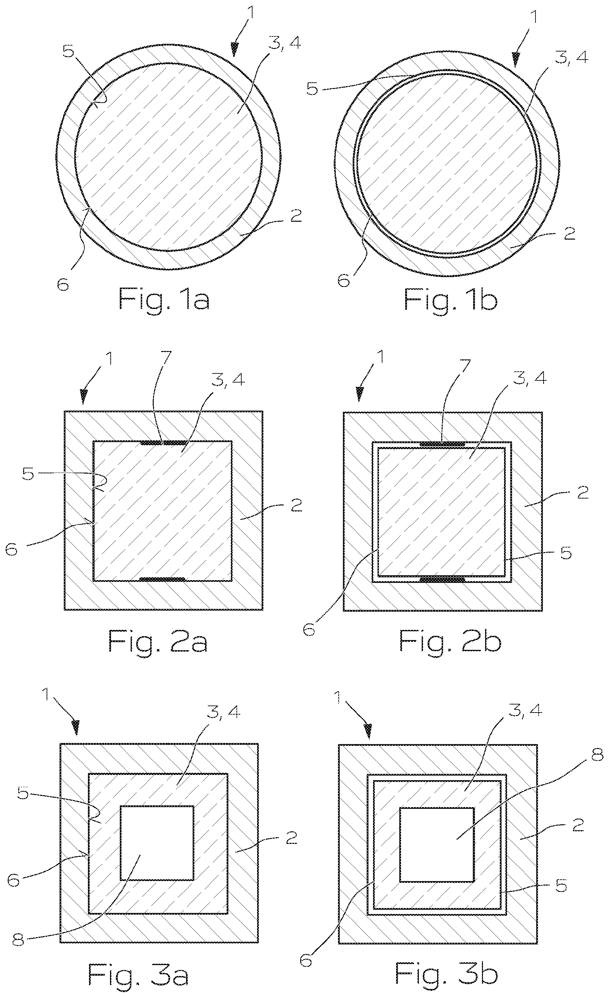

Fig. 3b zeigt die Vorrichtung gemäß dem vierten Ausführungsbeispiel im Fügezustand.

Sofern nicht anders angegeben zeigen die Figuren die folgenden Merkmale: Verbundträger 1, Außenkörper 2, Kern 3, Innenraum 4, Innenfläche 5, Außenfläche 6, Formschlussfortsatz 7, Hohlraum 8, Innenprofilkörper 9, Außenfläche 10.

Fig. 1a zeigt eine Ausführungsform einer erfindungsgemäßen Vorrichtung im Betriebszustand gemäß einem ersten Ausführungsbeispiel. Fig. 1a zeigt die Vorrichtung in einer schematischen Schnittansicht, wobei die Schnittebene im Wesentlichen orthogonal zur Längserstreckungsrichtung der Vorrichtung angeordnet ist.

Die Vorrichtung ist als Verbundträger 1 mit kreisförmigem Querschnitt ausgebildet und umfasst einen hohlprofilförmigen Außenkörper 2 mit einem Innenraum 4. Im Innenraum 4 ist ein Kern 3 angeordnet. Der Kern 3 ist bei Fluidkontakt aufquellbar und in dieser Ausführungsform aus Holz. In Fig 1a ist der Verbundträger Betriebszustand abgebildet, der Kern 3 ist also aufgequollen. Der Kern 3 im Innenraum 4 ist in diesem Zustand durch Wasser aufgequollen und übt durch die Quellung einen Druck auf den Außenkörper 2 aus. Die Außenfläche 6 des Kerns 3 steht vollständig mit der Innenfläche 5 des Außenkörpers 2 in direktem Kontakt.

In anderen nicht gezeigten Ausführungsformen ist zwischen Außenfläche 6 des Kerns 3 und Innenseite 5 des Außenkörpers 2 eine Verbindungsschicht, beispielsweise eine Klebeschicht, angeordnet.

Der Außenkörper 2 ist in diesem Ausführungsbeispiel als rohrförmiges Stahlprofil ausgebildet. Der Kern 3 ist eine längsgestreckte im Wesentlichen zylinderförmige Stange aus Holz.

Der Kern 3 ist fluiddicht im Innenraum 4 des Außenkörpers 2 eingeschlossen, wobei an den beiden offenen Enden des Außenkörpers 2 Verschlüsse aus Kunststoff vorgesehen sind (nicht dargestellt). Dadurch kann der Fluidgehalt des Kerns 3 auch bei sich ändernden äußeren Bedingungen im Wesentlichen konstant gehalten werden.

Fig. 1b zeigt eine Ausführungsform einer erfindungsgemäßen Vorrichtung im Fügezustand. Die Außenfläche 6 des Kerns 3 ist in diesem Zustand von der Innenseite 5 des Außenkörpers 2 beabstandet, es besteht also insbesondere eine Spielpassung zwischen Kern 3 und Innenfläche 5 des Außenkörpers 2. Hinsichtlich der weiteren Merkmale wird auf die Beschreibung der Fig. 1a verwiesen.

Den Fügezustand kann die Vorrichtung insbesondere beim Herstellen der Vorrichtung bzw. des Verbundträgers 1 einnehmen. Im Fügezustand kann der Kern 3 in den Innenraum 4 des Außenkörpers 2 eingeführt werden. Durch Erhöhung des Wassergehalts wird der Verbundträger 1 in den Betriebszustand gebracht, sodass der Kern 3 mit seiner Außenfläche 6 gegen die Innenfläche 5 des Außenkörpers 2 drückt.

In diesem Ausführungsbeispiel liegt der Wassergehalt des Kerns 3 im Betriebszustand bei etwa 25 Gew.-% und im Fügezustand bei etwa 10 Gew.-%.

Wenn der Verbundträger auseinandergebaut werden soll, wird zumindest ein Verschluss entfernt. Dann kann die überschüssige Feuchte austreten und es kommt zu einem Schwund des Kerns 3, womit wiederum ein Fügezustand erreicht wird, in dem der Kern 3 aus dem Innenraum 4 des Außenkörpers 2 entnommen werden kann. Das Austreten der Feuchte kann durch Erhitzen der Vorrichtung begünstigt werden.

Fig. 2a zeigt eine Ausführungsform einer erfindungsgemäßen Vorrichtung in einer schematischen Darstellung im Betriebszustand gemäß einem zweiten Ausführungsbeispiel. Fig. 2b zeigt die Vorrichtung gemäß dem zweiten Ausführungsbeispiel im Fügezustand. Fig, 2a und 2b zeigen die Vorrichtung jeweils in einer schematischen Schnittansicht, wobei die Schnittebene im Wesentlichen orthogonal zur Längserstreckungsrichtung der Vorrichtung angeordnet ist.

Der Verbundträger 1 gemäß dem zweiten Ausführungsbeispiel entspricht weitgehend jenem gemäß dem im Detail beschriebenen ersten Ausführungsbeispiel.

Im Unterschied zum ersten Ausführungsbeispiel weisen der Kern 3 und der Außenkörper 2 im zweiten Ausführungsbeispiel einen quadratischen Querschnitt auf.

Ferner sind an der Innenfläche 5 des Außenkörpers 2 Formschlussfortsätze 7 in Form von Rippen angeordnet. Die Formschlussfortsätze 7 drücken im Betriebszustand in die Oberfläche des Kerns 3, wodurch zusätzlich eine Formschlussverbindung zwischen Kern und Außenkörper erreicht werden. Die Rippen sind in regelmäßigen Abständen entlang der Längserstreckungsrichtung des Verbundträgers 1 angeordnet.

Zudem besteht im Unterschied zum ersten Ausführungsbeispiel kein fluiddichter Einschluss des Kerns 3 im Innenraum 4 des Außenkörpers 2. Der Außenkörper 2 ist in diesem Ausführungsbeispiel beidseitig offen. Die reibschlüssige Verbindung zwischen Kern 3 und Außenkörper 2 wird in diesem Ausführungsbeispiel dadurch erreicht, dass der Wassergehalt des Kerns 3 im Fügezustand unter jenen Wassergehalt gebracht wird, der der Ausgleichsfeuchte des Kernmaterials bei einer Temperatur von 20°C und einer relativen Luftfeuchte von 50% entspricht. Der Kern wird also getrocknet, sodass sein Wassergehalt insbesondere unter 5 Gew.-% liegt.

Im Fügezustand besteht auch keine formschlüssige Verbindung zwischen den Formschlusselementen 7 und dem Kern 3 mehr.

In diesem Fügezustand kann der Kern 3 in den Innenraum 4 des Außenkörpers eingeführt werden. Dann verbleibt der Verbundträger 1 bei Umgebungsbedingungen und der Wassergehalt des Kerns 3 wird allmählich ansteigen, bis der Wassergehalt der Ausgleichsfeuchte entspricht. Dann befindet sich die Vorrichtung im Betriebszustand, wobei ein ähnlicher Effekt erzielt wird wie beim ersten Ausführungsbeispiel. Ein fluiddichter Verschluss ist hingegen nicht erforderlich, was die Konstruktion weiter vereinfacht.

Zum Auseinanderbau der Vorrichtung kann der verbundträger 1 erhitzt werden, sodass der Fluidgehalt des Kerns 3 reduziert wird.

Fig. 3a zeigt eine Ausführungsform einer erfindungsgemäßen Vorrichtung in einer schematischen Darstellung im Betriebszustand gemäß einem dritten Ausführungsbeispiel. Fig. 3b zeigt die Vorrichtung gemäß dem dritten Ausführungsbeispiel im Fügezustand. Fig. 3a und 3b zeigen die Vorrichtung jeweils in einer schematischen Schnittansicht, wobei die Schnittebene im Wesentlichen orthogonal zur Längserstreckungsrichtung der Vorrichtung angeordnet ist.

Das dritte Ausführungsbeispiel entspricht im Wesentlichen dem zweiten Ausführungsbeispiel, mit dem Unterschied, dass der Kern 3 als Hohlkörper ausgebildet ist, der einen Hohlraum 8 aufweist. Dies begünstigt die Änderung des Wassergehalts, wobei durch die größere freie Oberfläche insbesondere eine schnellere Änderung des Wassergehalts ermöglicht wird. In diesem Ausführungsbeispiel ist der Kern 3 als Kastenprofil ausgeführt. Der Hohlraum 8 kann für Rohre, Leitungen, Verkabelungen und dergleichen eingesetzt werden.

In einem nicht gezeigten Ausführungsbeispiel können auch in dieser Ausführungsform Formschlussfortsätze vorgesehen sein.

Zudem sind im Unterschied zum zweiten Ausführungsbeispiel auch keine Formschlussfortsätze 7 vorgesehen.

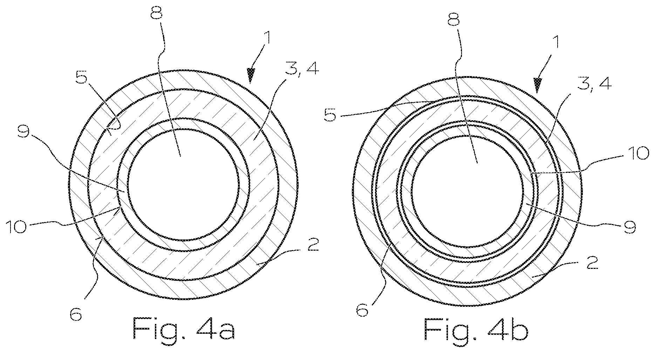

Fig. 4a zeigt eine Ausführungsform einer erfindungsgemäßen Vorrichtung in einer schematischen Darstellung im Betriebszustand gemäß einem vierten Ausführungsbeispiel. Fig. 4b zeigt die Vorrichtung gemäß dem vierten Ausführungsbeispiel im Fügezustand. Fig. 4a und 4b zeigen die Vorrichtung jeweils in einer schematischen Schnittansicht, wobei die Schnittebene im Wesentlichen orthogonal zur Längserstreckungsrichtung der Vorrichtung angeordnet ist.

Das vierte Ausführungsbeispiel entspricht im Wesentlichen dem dritten Ausführungsbeispiel, mit dem Unterschied, dass der Außenkörper 2 und der Kern 3 hohlzylinderförmig ausgebildet sind. Im Hohlraum 8 des Kerns 3 ist ein Innenprofilkörper 9 angeordnet, der in diesem Ausführungsbeispiel ein Stahlrohr ist.

Im Betriebszustand, wie in Fig. 4a gezeigt, drückt der Kern 3 durch die Quellung auf die Innenfläche 5 des Außenkörpers 2 sowie auf die Außenfläche 10 des Innenprofilkörpers 9.

Die Vorrichtung kann in diesem Ausführungsbeispiel als lastabtragendes Bauteil und gleichzeitig als Rohr zur Förderung von Flüssigkeiten oder Gasen, beispielsweise als Wasserrohr, eingesetzt werden.

## Patentansprüche

1. Vorrichtung, insbesondere Verbundträger (1), umfassend einen hohlprofilförmigen Außenkörper (2) mit einem Innenraum (4) und einen im Innenraum (4) angeordneten Kern (3), wobei der Kern (3) ein bei Fluidkontakt quellbares Faserverbundmaterial, nämlich Holz, umfasst oder daraus gebildet ist, wobei der Kern (3) im Innenraum (4) durch ein Fluid aufgequollen ist und einen durch die Quellung erzeugten Druck auf den Außenkörper (2) ausübt, sodass der Kern (3) im Innenraum (4) verspannt ist, **dadurch gekennzeichnet, dass** der Kern durch den Außenkörper (2) sowie durch zumindest einen am Außenkörper (2) angeordneten Verschluss fluiddicht eingeschlossen ist.

2. Vorrichtung nach Anspruch 1, **dadurch gekennzeichnet, dass** der Außenkörper (2) einen geschlossenen Querschnitt aufweist.

3. Vorrichtung (1) nach einem der Ansprüche 1 oder 2, **dadurch gekennzeichnet, dass** der Außenkörper (2) als Metallprofil, insbesondere als Stahlprofil, ausgebildet ist.

4. Vorrichtung nach einem der Ansprüche 1 bis 3, **dadurch gekennzeichnet, dass** das Fluid ausgewählt ist aus einem oder mehreren der folgenden Fluide: Wasser, Salzlösung, Alkohol, Ammoniak.

5. Vorrichtung nach einem der Ansprüche 1 bis 4, **dadurch gekennzeichnet, dass** der Kern (2) entlang seines äußeren Umfangs einen Verdichtungsbereich aufweist, und/oder dass durch den durch die Quellung erzeugten Druck die Spannung entlang des Umfangs des Profilquerschnitts des Außenkörpers (2) erhöht ist.

6. Vorrichtung (1) nach einem der Ansprüche 1 bis 5, **dadurch gekennzeichnet, dass** eine Außenfläche (6) des Kerns (3) zumindest teilweise mit der Innenseite (5) des Außenkörpers (2) in direktem Kontakt steht, und/oder dass zwischen Außenfläche (6) des Kerns (3) und Innenseite (5) des Außenkörpers (2) eine Verbindungsschicht, beispielsweise eine Klebeschicht, angeordnet ist.

7. Vorrichtung (1) nach einem der Ansprüche 1 bis 6, **dadurch gekennzeichnet, dass** der Kern (3) als Hohlkörper ausgebildet ist, der gegebenenfalls einen im Wesentlichen in seiner Längserstreckungsrichtung verlaufenden, insbesondere zumindest einseitig offenen, Hohlraum (8) aufweist.

8. Vorrichtung (1) nach Anspruch 7, **dadurch gekennzeichnet, dass** im Hohlraum (8) ein Innenprofilkörper (9) angeordnet ist, wobei der Kern (3) einen durch seine Quellung erzeugten Druck auf den Innenprofilkörper (9) ausübt.

9. Vorrichtung nach einem der Ansprüche 1 bis 8, **dadurch gekennzeichnet, dass** der Außenkörper (2) und der Kern (3) reibschlüssig miteinander verbunden sind.

10. Vorrichtung nach einem der Ansprüche 1 bis 9, **dadurch gekennzeichnet, dass** der Außenkörper (2) an seiner Innenseite (5) zumindest ein Formschlusselement, insbesondere einen Formschlussfortsatz (7), zur formschlüssigen Verbindung zwischen Außenkörper (2) und Kern (3) aufweist, wobei der Kern (3) gegebenenfalls zumindest eine Formschlussausnehmung zum Eingriff des Formschlussfortsatzes (7) aufweist.

11. **Verfahren** zur Herstellung einer Vorrichtung (1), insbesondere eines Verbundträgers, umfassend einen hohlprofilförmigen Außenkörper (2) mit einem Innenraum (4) und einen im Innenraum (4) angeordneten Kern (3), wobei der Kern (3) ein bei Fluidkontakt quellbares Faserverbundmaterial, nämlich Holz, umfasst oder daraus gebildet ist, wobei das Verfahren die folgenden Schritte umfasst:
(a) Bereitstellen des Kerns (3), wobei der Kern (3) einen ersten Fluidgehalt aufweist,
(b) Einführen des Kerns (3) den Innenraum (4) des Außenkörpers (2),
(c) Erhöhen des Fluidgehalts des Kerns (3), sodass der Kern (3) durch das Fluid aufgequollen ist und eine durch die Quellung erzeugte Druckkraft auf den Außenkörper (2) ausübt, wobei der Kern einen zweiten Fluidgehalt aufweist,
(d) fluiddichtes Einschließen des Kerns (3) durch den Außenkörper (2) sowie durch zumindest einen am Außenkörper (2) angeordneten Verschluss.

12. Verfahren nach Anspruch 11, **dadurch gekennzeichnet, dass** das Fluid Wasser ist, und/oder dass der zweite Fluidgehalt zumindest 1 Gew.-%, insbesondere zumindest 2 Gew.-%, über dem ersten Fluidgehalt liegt.

13. Verfahren nach Anspruch 11 oder 12, **dadurch gekennzeichnet, dass** Kern (3) und Innenraum (4) in Schritt (b) eine Spielpassung aufweisen.

14. Verfahren nach einem der Ansprüche 11 bis 13, **dadurch gekennzeichnet, dass** das Fluid Wasser ist, und dass der erste Fluidgehalt höchstens 10 Gew.-%, insbesondere höchstens 5 Gew.-% beträgt, und/oder dass der erste Fluidgehalt unter der Gleichgewichtsfeuchte des Faserverbundmaterials des Kerns bei einer Temperatur von 20°C und einer relativen Luftfeuchte von 50% liegt.

15. Verfahren nach einem der Ansprüche 11 bis 14, **dadurch gekennzeichnet, dass** das Verfahren ferner folgenden Schritt umfasst:
(d) Bilden von Formschlusselementen durch Verformen des Außenkörpers (2).

## Claims

1. A device, in particular a composite beam (1), comprising a hollow profile-shaped outer body (2) having an interior space (4) and a core (3) arranged in the interior space (4), wherein the core (3) comprises or is formed from a fibre composite material, namely wood, that is swellable upon contact with a fluid, wherein the core (3) in the interior space (4) is swollen by a fluid and exerts a pressure on the outer body (2) generated by the swelling, such that the core (3) is braced in the interior space (4), **characterized in that** the core is fluid-tightly enclosed by the outer body (2) and by at least one closure arranged on the outer body (2).

2. The device according to claim 1, **characterized in that** the outer body (2) has a closed cross-section.

3. The device (1) according to one of claims 1 or 2, **characterized in that** the outer body (2) is designed as a metal profile, in particular as a steel profile.

4. The device according to one of claims 1 to 3, **characterized in that** the fluid is selected from one or more of the following fluids: water, saline solution, alcohol, ammonia.

5. The device according to one of claims 1 to 4, **characterized in that** the core (2) has a compaction area along its outer circumference, and/or **in that** the stress along the circumference of the profile cross-section of the outer body (2) is increased by the pressure generated by the swelling.

6. The device (1) according to one of claims 1 to 5, **characterized in that** an outer surface (6) of the core (3) is at least partially in direct contact with the inner side (5) of the outer body (2), and/or **in that** a connecting layer, for example an adhesive layer, is arranged between the outer surface (6) of the core (3) and the inner side (5) of the outer body (2).

7. The device (1) according to one of claims 1 to 6, **characterized in that** the core (3) is designed as a hollow body which optionally has a cavity (8) running substantially in its longitudinal extension direction, which is in particular open on at least one side.

8. The device (1) according to claim 7, **characterized in that** an inner profile body (9) is arranged in the cavity (8), wherein the core (3) exerts a pressure on the inner profile body (9) generated by its swelling.

9. The device according to one of claims 1 to 8, **characterized in that** the outer body (2) and the core (3) are frictionally engaged with each other.

10. The device according to one of claims 1 to 9, **characterized in that** the outer body (2) has at least one positive-locking element on its inner side (5), in particular a positive-locking extension (7), for the positive connection between the outer body (2) and the core (3), wherein the core (3) optionally has at least one positive-locking recess for engagement of the positive-locking extension (7).

11. **A method** for manufacturing a device (1), in particular a composite beam, comprising a hollow profile-shaped outer body (2) having an interior space (4) and a core (3) arranged in the interior space (4), wherein the core (3) comprises or is formed from a fibre composite material, namely wood, that is swellable upon contact with a fluid, wherein the method comprises the following steps:
(a) providing the core (3), wherein the core (3) has a first fluid content,
(b) inserting the core (3) into the interior space (4) of the outer body (2),
(c) increasing the fluid content of the core (3) such that the core (3) is swollen by the fluid and exerts a compressive force on the outer body (2) generated by the swelling, wherein the core has a second fluid content,
(d) fluid-tightly enclosing the core (3) by the outer body (2) and by at least one closure arranged on the outer body (2).

12. The method according to claim 11, **characterized in that** the fluid is water, and/or **in that** the second fluid content is at least 1 wt.%, in particular at least 2 wt.%, above the first fluid content.

13. The method according to claim 11 or 12, **characterized in that** the core (3) and interior space (4) in step (b) have a clearance fit.

14. The method according to one of claims 11 to 13, **characterized in that** the fluid is water, and **in that** the first fluid content is at most 10 wt.%, in particular at most 5 wt.%, and/or **in that** the first fluid content is below the equilibrium moisture content of the fibre composite material of the core at a temperature of 20°C and a relative humidity of 50%.

15. The method according to one of claims 11 to 14, **characterized in that** the method further comprises the following step:
(d) forming positive-locking elements by deforming the outer body (2).

## Revendications

1. Dispositif, en particulier poutre composite (1), comprenant un corps extérieur (2) en forme de profilé creux avec un espace intérieur (4) et un noyau (3) disposé dans l'espace intérieur (4), dans lequel le noyau (3) comprend ou est formé à partir d'un matériau composite fibreux, à savoir du bois, pouvant gonfler au contact d'un fluide, dans lequel le noyau (3) est gonflé dans l'espace intérieur (4) par un fluide et exerce une pression générée par le gonflement sur le corps extérieur (2), de sorte que le noyau (3) est serré dans l'espace intérieur (4), **caractérisé en ce que** le noyau est enfermé de manière étanche aux fluides par le corps extérieur (2) ainsi que par au moins une fermeture disposée sur le corps extérieur (2).

2. Dispositif selon la revendication 1, **caractérisé en ce que** le corps extérieur (2) présente une section transversale fermée.

3. Dispositif (1) selon l'une des revendications 1 ou 2, **caractérisé en ce que** le corps extérieur (2) est réalisé sous forme de profilé métallique, en particulier de profilé en acier.

4. Dispositif selon l'une des revendications 1 à 3, **caractérisé en ce que** le fluide est choisi parmi un ou plusieurs des fluides suivants : eau, solution saline, alcool, ammoniac.

5. Dispositif selon l'une des revendications 1 à 4, **caractérisé en ce que** le noyau (2) présente une zone de compression le long de sa périphérie extérieure, et/ou **en ce que** la pression générée par le gonflement augmente la tension le long de la périphérie de la section transversale du profilé du corps extérieur (2).

6. Dispositif (1) selon l'une des revendications 1 à 5, **caractérisé en ce qu'**une surface extérieure (6) du noyau (3) est au moins partiellement en contact direct avec la face intérieure (5) du corps extérieur (2), et/ou **en ce qu'**une couche de liaison, par exemple une couche adhésive, est disposée entre la surface extérieure (6) du noyau (3) et la face intérieure (5) du corps extérieur (2).

7. Dispositif (1) selon l'une des revendications 1 à 6, **caractérisé en ce que** le noyau (3) est réalisé sous la forme d'un corps creux qui présente éventuellement une cavité (8) s'étendant essentiellement dans sa direction d'extension longitudinale, en particulier ouverte au moins d'un côté.

8. Dispositif (1) selon la revendication 7, **caractérisé en ce qu'**un corps profilé intérieur (9) est disposé dans la cavité (8), dans lequel le noyau (3) exerce une pression générée par son gonflement sur le corps profilé intérieur (9).

9. Dispositif selon l'une des revendications 1 à 8, **caractérisé en ce que** le corps extérieur (2) et le noyau (3) sont reliés entre eux par friction.

10. Dispositif selon l'une des revendications 1 à 9, **caractérisé en ce que** le corps extérieur (2) présente sur sa face intérieure (5) au moins un élément de liaison par la forme, en particulier un prolongement de liaison par la forme (7), pour la liaison par la forme entre le corps extérieur (2) et le noyau (3), dans lequel le noyau (3) présente éventuellement au moins un évidement de liaison par la forme pour l'engagement du prolongement de liaison par la forme (7).

11. **Procédé** de fabrication d'un dispositif (1), en particulier d'une poutre composite, comprenant un corps extérieur (2) en forme de profilé creux avec un espace intérieur (4) et un noyau (3) disposé dans l'espace intérieur (4), dans lequel le noyau (3) comprend ou est formé à partir d'un matériau composite fibreux, à savoir du bois, pouvant gonfler au contact d'un fluide, dans lequel le procédé comprend les étapes suivantes :
(a) fournir le noyau (3), dans lequel le noyau (3) a une première teneur en fluide,
(b) introduire le noyau (3) dans l'espace intérieur (4) du corps extérieur (2),
(c) augmenter la teneur en fluide du noyau (3) de sorte que le noyau (3) est gonflé par le fluide et exerce une force de compression générée par le gonflement sur le corps extérieur (2), dans lequel le noyau a une deuxième teneur en fluide,
(d) enfermer de manière étanche aux fluides le noyau (3) par le corps extérieur (2) ainsi que par au moins une fermeture disposée sur le corps extérieur (2).

12. Procédé selon la revendication 11, **caractérisé en ce que** le fluide est de l'eau et/ou **en ce que** la deuxième teneur en fluide est supérieure d'au moins 1 % en poids, en particulier d'au moins 2 % en poids, à la première teneur en fluide.

13. Procédé selon la revendication 11 ou 12, **caractérisé en ce que** le noyau (3) et l'espace intérieur (4) présentent un ajustement avec jeu à l'étape (b).

14. Procédé selon l'une des revendications 11 à 13, **caractérisé en ce que** le fluide est de l'eau, et **en ce que** la première teneur en fluide est d'au plus 10% en poids, notamment d'au plus 5% en poids, et/ou **en ce que** la première teneur en fluide est inférieure à l'humidité d'équilibre du matériau composite fibreux du noyau à une température de 20°C et une humidité relative de 50%.

15. Procédé selon l'une des revendications 11 à 14, **caractérisé en ce que** le procédé comprend en outre l'étape suivante :
(d) former des éléments de fermeture de liaison par la forme en déformant le corps extérieur (2).
